Europäisches Patentamt

European Patent Office

Office européen des brevets

(11) Publication number: **0 459 039 A1**

# EUROPEAN PATENT APPLICATION

(21) Application number: 90305656.2

(51) Int. Cl.5: **G06F 1/14**, G04G 7/00

(22) Date of filing: 24.05.90

(43) Date of publication of application:
04.12.91 Bulletin 91/49

(84) Designated Contracting States:
AT BE CH DE DK ES FR GB GR IT LI LU NL SE

(71) Applicant: Hewlett-Packard Company
3000 Hanover Street
Palo Alto, California 94304(US)

(72) Inventor: Smith, Duncan
Garden Flat 30 Arley Hill
Cotham Bristol BS6 5PR(GB)
Inventor: Mellor, Paul
20 Bromley Road
Horfield Bristol BS7 9JB(GB)
Inventor: Cole, Robert
Brook House The Green
Westerleigh Bristol BS17 4QT(GB)

(74) Representative: Smith, Norman Ian et al
F.J. CLEVELAND & COMPANY 40-43
Chancery Lane
London WC2A 1JQ(GB)

(54) Apparatus and method for generating time data for computer networks.

(57) An interface circuit which provides time data in NTP format. The circuit includes a counter (11, 12) which counts the output of signal source (18) which can be source of stable frequency such as a caesium beam standard, or a crystal oscillator associated with the circuit. The circuit includes control means (10) which provides an interface to an external time source such as the Rugby MSF broadcast to allow the time data provided by the counter to be synchronised to that source.

*FIG.1*

This invention relates to the generation of data representing an indication of time. It has application to the generation of time-indicative data for use by computers which form part of a network. It has particular application in computers which use what is known as the Network Time Protocol (NTP).

The use of networks of computers has become widespread and continues to increase. A problem in such networks is the provision of accurately synchronised time information for the various elements which make up a network. Each computer which forms part of such a network has its own individual clock and these clocks inevitably run at different rates. Thus if the clocks are synchronised initially as time progresses large discrepencies can develop between the time indicated by the various clocks. It is important in such networks that there is synchronisation of clocks in order to ensure that the network, and systems distributed across it, can operate correctly.

One attempt at providing such synchronisation is what is called Network Time Protocol (NTP). This is a technique for synchronising with network time servers on a most-trusted basis. A detailed description of NTP is given in "Network Time Protocol (Version 2): Specification and Implementation" RFC 1119 September 1989. In order to support the use of NTP in a computer there is a requirement for a clock which can support the NTP format and which has a much higher real resolution than that currently provided. The present invention is concerned with a circuit which can provide such a clock.

According to the present invention there is provided a circuit for providing data indicative of time characterised in that it comprises counting means and control means, the counting means being arranged to count signals derived from a signal source, the count of the counting means being indicative of time in a selected format, control means providing an interface to an external source of time data whereby the counter can be synchronised to the the time represented by the data.

The format may be the NTP format.

The counter may be an n bit counter in which the least significant m bits represent fractions of a second and the most significant (n-m) bits represent seconds.

The circuit may include circuit means coupled to the output of the signal source and and arranged to provide $2^m$ signals per second to the least significant m bits of the counter.

The present circuit will normally operate in conjunction with a computer for which it is to provide time data. The computer will provide signals for controlling operation of the circuit and will read time data from the counter. The computer will control initialisation of the circuit on start-up. It will read the date and time data provided by the external time source, convert this into NTP format and load the correct time into the counter. Once initialised the counter is started by a synchronisation signal derived from the external source of time data and can free run counting signals derived from a signal source of stable frequency, or from a crystal oscillator associated with the circuit, with occasional synchronisation to the external time source. The time data are available without the need for interrupting.

The external time source may the Rugby MSF signal. Because of transmission and decoding delays the signal received from this source is subject to slew and delay and hence there are fluctuations in the arrival times of the synchronisation signals. To minimise these problems the synchronisation signals can be used to latch the counter and the computer can accumulate samples of the signals. From these samples it determines an offset to obtain a more accurate indication of the synchronisation point. When the offset has been calculated the contents of the counter are adjusted.

The circuit can be initialised from the workstation clock and then NTP is used to signal to another time server on the network.

The invention will be described now by way of example only, with particular reference to the accompanying drawings. In the drawings:

Figure 1 is a block schematic diagram illustrating a circuit in accordance with the present invention;

Figure 2 is a block diagram illustrating the control part of the circuit of Figure 1;

Figure 3 is a block diagram illustrating the sub-seconds counting part of the circuit of Figure 1, and

Figure 4 is a circuit diagram illustrating the counter and interface part of the circuit of Figure 1.

The circuit to be described is an interface circuit which has been designed for use with an HP 9000/300 workstation, but it will be appreciated that the principles involved in the interface can be applied to a wide range of computing equipment. The interface is designed to provide the workstation with a time stamp in an NTP format. The NTP format provides for a 64-bit time stamp divided into two 32-bit numbers, the first 32 of which represent the number of seconds since zero hours on 1st January 1900, and the second 32 of which represents the fractional part of a second as a binary fraction. In the present circuit the fractional part of the second is provided by a sixteen bit integer only. More sub-second bits could be provided by a more sophisticated circuit design.

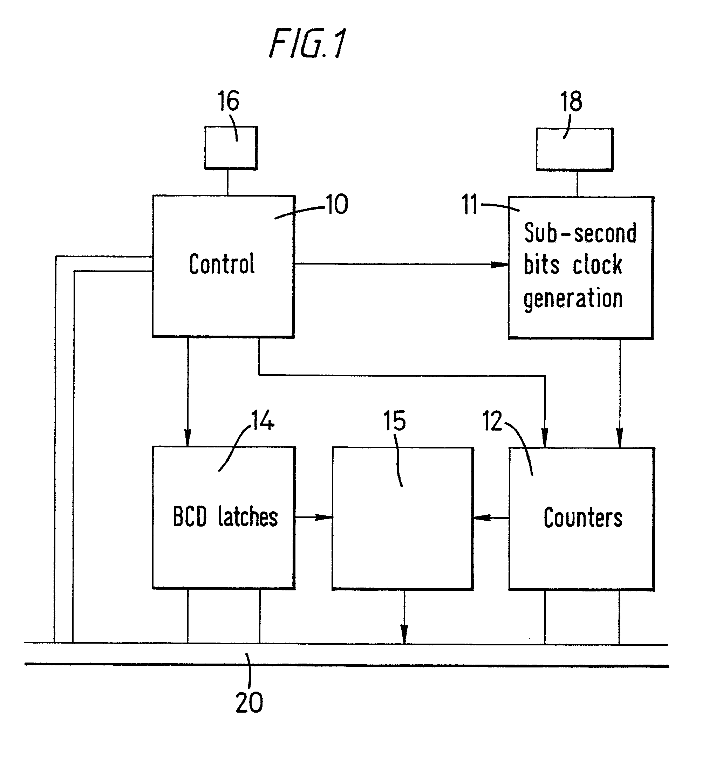

Referring to Figure 1 the circuit can be considered as comprising five sections. These are a control section 10, a circuit 11 for generating bits representing fractions of a second, a counter 12, BCD latches 14 and interface circuitry 15. The circuit is designed to be built on an HP 98630A prototyping breadboard circuit which provides an interface for the HP 9000/300, and makes use of certain signals from that circuit. The control section 10 provides signals for controlling the circuit 11 and the counter 12. It is connected to a receiver and decoder 16 which receives a recognised time standard signal, e.g. the MSF broadcast provided by the Rugby transmitter. The Rugby MSF broadcast provides date and time information. The receiver 16 can be a European Electronic Systems model 201 radio clock. This receiver provides a choice of outputs which includes a TTL-compatible BCD output in which the time is output as two groups of six BCD digits representing hours, minutes, seconds together with the year, month and day. Also available is a per-second pulse and the rising edge of this pulse is used by the control circuit 10 to provide a timing signal for synchronising the counter 12.

The circuit 11 receives the output of a source 18 of signals of stable frequency. The source 18 can be a stable source such as a caesium beam frequency standard or a crystal oscillator. Caesium beam sources are extremely accurate and stable, the accuracy being specified as of the order of ± than one part per hundred billion and a stability of ±5 parts per trillion over the tube life. The standard has various sinusoidal outputs, the one used by the present circuit being a 1 MHz output. An alternative to a caesium source is a rubidium source.

The circuit 11 is arranged to provide at its output $2^m$ bits per second where m is the number of bits of the counter 12 which represent fractions of a second. In the present case m = 16.

The control circuit 10 can also permit the BCD data from the receiver 16 to be fed directly into the BCD latches 14.

Communication with the HP 9000/300 work station and the HP 98630A interface is provided by a bus 20.

In operation the circuit is firstly initialised from the MSF receiver. To do this the 9000/300 workstation reads the BCD time stamp fed into latches 14 from the MSF receiver and converts it into an NTP format. This is then loaded into the counter 12 and the circuit is synchronised on the next edge of the per second pulse. This is carried out under the control of the software contained in the workstation. The circuit can be initialised from the workstation clock and then NTP is used to signal to another time server on the network. After initialisation the counter 12 can free run counting the bits provided by the circuit 11 and the current count of the counter represents the current time in the NTP format. This time value can be read directly without the need for the workstation to interrupt. It is an indication of time which can be read on demand. Periodically, e.g. every minute, the workstation software requests the circuit of Figure 1 to synchronise with the MSF receiver. In response to this request the control circuit 10 looks for the edge of the per second pulse from the receiver 16 and on detection the sub-second part of the counter 12 is latched and an interrupt generated for the workstation. If the MSF signal and the circuit of Figure 1 are in perfect synchronisation then the latched value of the sub-second part of the counter will be zero. In practice there will be a small offset and this represents a sample. These samples are collected by the workstation and a statistic computed to find the true synchronisation point for synchronising with the signal from the receiver 16. It will be appreciated that because of transmission and receiver delays there will be a spread of synchronisation points around some median value. The difference between the current time value as represented by the counter 12 and the median value of the samples is used to calculate the offset that needs to be applied to the time value provided by the counter 12 of the circuit. When the standard deviation on the median has attained a settled value, the offset is used to adjust the time value represented by the counter by adding in the offset which has been calculated to the current counter value. The software loads the interface with the new second and sub-second register values.

Thus, it will be seen that the circuit of Figure 1 provides a 48-bit counter output representing a synchronised indication of time. The indication is synchronised to the signals provided by the Rugby MSF transmitter and stability is provided by the frequency source 18. The most significant 32 bits of the counter output represent seconds whilst the least significant 16 bits give the binary fraction of a second. This range allows a resolution of one part in 65536 of a second, i.e. approximately 15 microseconds and also provides a calendar range of 136 years. The counter format is such that it represents the most significant 48 bits of a 64-bit NTP time stamp.

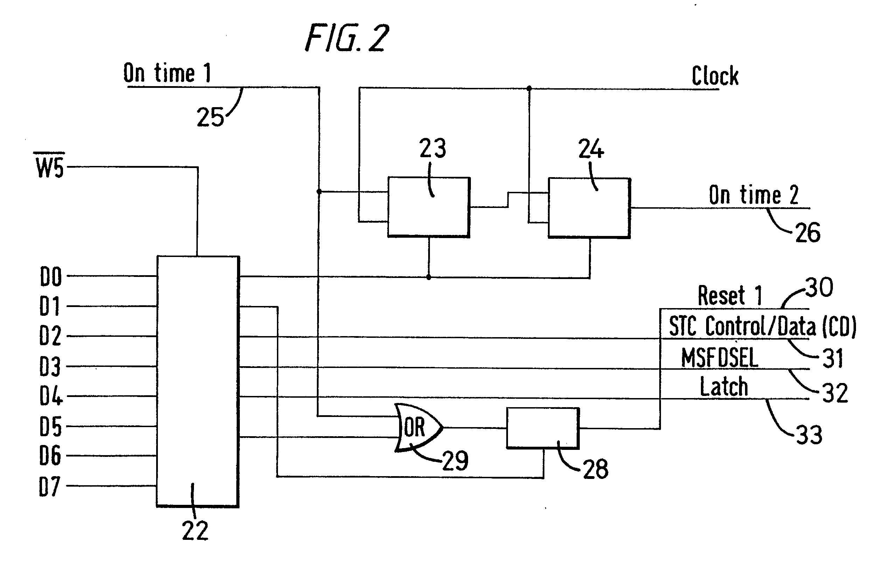

The circuits shown as blocks in Figure 1 will now be described in more detail. Much of the circuitry to be described can be implemented in a Xilinx Logic Cell Array. Referring to Figure 2 the Figure 2 the control section 10 is based upon an 8-bit register 22 which receives signals from the interface circuitry of the workstation on lines D0 to D7 and a write signal on line $\overline{W5}$. The use of this register avoids the need for any address or bus signal decoding because the 98630A interface circuitry provides the appropriate read and write sig-

nals on lines $\overline{R5}$ and $\overline{W5}$. The control circuitry also includes flip flops 23, 24 which receive and deskew the per-second pulse derived from the MSF receiver 16 on line 25. The deskewed signal appears on line 26. The control circuit includes a further flip-flop 28 which can receive the signals from D1. The flip-flop 28 can be clocked by the per second pulse or the signal on D5 via OR gate 29.

The control circuitry 10 operates in response to bit patterns received on lines D0 to D7 and these patterns can control the functioning of the interface circuit as follows:

Bit 0. Gates the signals on line 25 (i.e. the on time signals) through flip-flops 23, 24 to the counter and interrupt circuitry. These signals appear on line 26.

Bit 1. Resets the circuit 11 via line 30.

Bit 2. Switches the counter between control/data and inputs/outputs via line 31 (CD).

Bit 3. Switches the MSF BCD data between time and calendar via line 32.

Bit 4. Latches the BCD data for reading via line 33.

Bit 5. Starts the counters when the circuit is not connected to a time code receiver.

The flip flop 28 allows the reset signal to be clocked by the on tee signal on line 25 so resetting the sub-second bits circuitry 11 at the correct time.

The data select signal on line 32 is fed to the MSF receiver 16 and switches the BCD output between time, i.e. hours, minutes and seconds and calendar, i.e. day, month and year.

The clock signals (CLOCK) can be provided by a 1MHz crystal oscillator which will be referred to below.

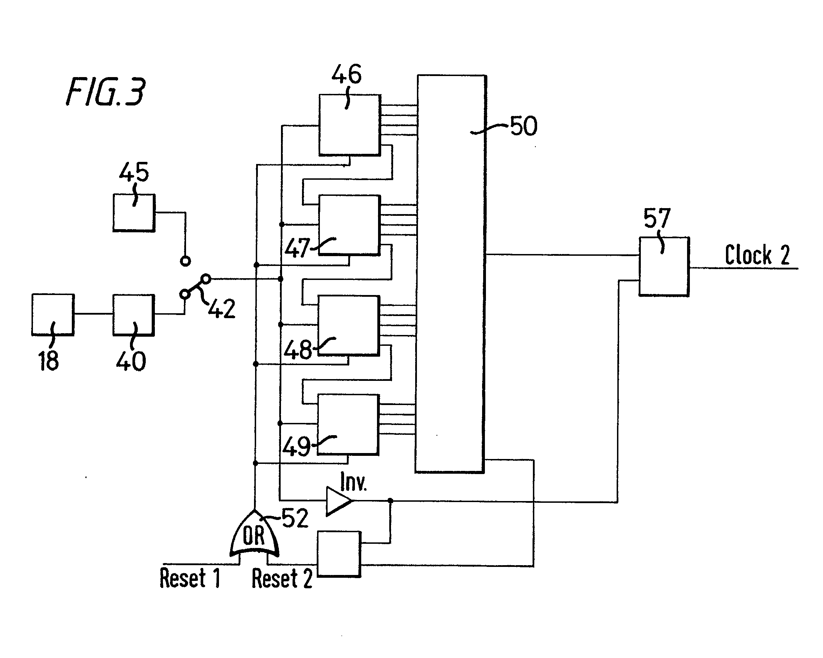

Figure 3 shows the circuit 11 which generates the bits for counting by sub-second part of the counter 12. This comprises a Schmitt trigger circuit 40 which receives the 1 MHz clock from the caesium beam frequency standard 18 or the 1 MHz crystal. The Schmitt trigger circuit is required because the output from the frequency standard 18 is sinusoidal. The Schmitt trigger is used to convert the sinusoid into a low noise TTL compatible signal. The output of the Schmitt trigger 40 is connected to a switch 42 which is also connected to the output of the crystal oscillator 45 which also provides the clock signals for the interface circuit.

It will be seen that the switch 42 allows connection to either the caesium beam frequency standard 18 or the 1 MHz crystal oscillator 45. In The latter connection will be used in when, for example, the high stability source 18 fails or the circuit is being used without a stable frequency source.

The clock signals fed via switch 42 are used to drive a circuit consisting of a 16 bit counter formed by four 4-bit binary ripple counters 46, to 49, the output lines from which feed the address lines of a 64-kbyte EPROM 50. The EPROM outputs 65536 ($2^{16}$) pulses every second. This is the number required to provide a full count for the 16 sub-second bits of the counter 12. This is an average of 1 pulse every 15.258 microseconds which is not a multiple of one microsecond and hence cannot be achieved by counters alone. The EPROM is used to output a pulse on average 1/65536 seconds, although in practice it achieves this by outputting some pulses with intervals of 16 microseconds and others with intervals of 15 microseconds. The contents of the EPROM are such that the average is exactly one pulse every 1/65536 seconds.

The input to the counters 46 to 49 is at 1 MHz. By taking the ratio of 1000,000 to 65536 it can be seen that the EPROM has to output 1024 pulses for every 15625 inputs.

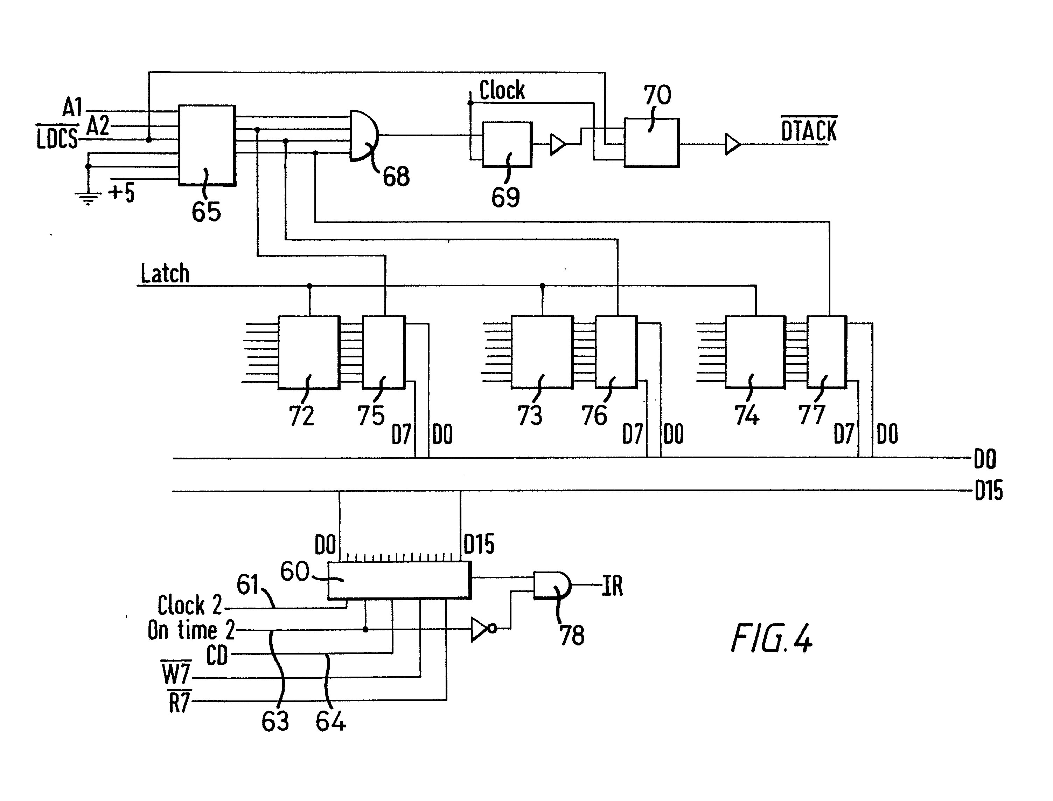

The output from the EPROM is fed via a flip flop 51 which is used to eliminate irregularities introduced by the EPROM. This output is fed to the counter 12 which is shown in more detail in Figure 4. The counters 46 to 49 can be reset either by the reset signal Reset 1 produced by the control signal circuit of Figure 2 or by a reset signal Reset 2 derived from data bit 1 of the EPROM 50. The reset signals are fed to the counters via an OR gate 52.

Figure 4 shows the counter 12 together with the input and output circuitry 15 and the BCD latches 14. These circuits are shown generally by the reference numerals used in Figure 1.

The 48 bit counter 12 is implemented using an AMD 9513A system timing controller chip 60. This element has a number of features including the ability for its count to appear frozen at its outputs without actually disturbing the count, thereby eliminating the need for output latches. It is programmable. The signal on the $\overline{R7/W7}$ lines from the workstation are are used to address the chip 60 as required. The counter receives the output of the EPROM on line 61, the signal on time 2 on line 63 and the signal CD for switching between control and data modes on line 64.

The counter and the three BCD output latches 14 are selected by a 3-to-8 decoder/demultiplexer 65 in response to address signals A1, A2 and a signal $\overline{LDCS}$ from the work station. The circuit 65 forms part of the bus interface 15 which also includes a gate 68 and flip flops 69, 70 that provide a signal $\overline{DTACK}$ which is required by the workstation. These are clocked by the 1 MHz system clock signal output.

The data from the controller 60 representing the time appears at on bus lines D0 to D15. It will be appreciated that three reads are required in order to obtain the complete 48 bit time data, and this is within the capability of the circuitry concerned.

The BCD latches 72, 73, 74 can be latched by the latch signal from the control circuit of Figure 1. The outputs and latches are fed out on to bus lines D0 to D7 via buffers 75, 76, 77 in response to signals $\overline{OE1}$, $\overline{OE2}$, $\overline{OE3}$ from the decoder/demultiplexer 65.

The synchronisation phase uses the on time pulse on time 2 to latch the counters and generate an interrupt indicating the availability of a sample. The system timing controller chip 60 can generate interrupts through the use of its internal comparators. The output is passed to the 98630A interrupt request line IR along with one time 2 via a gate 75.

The present interface circuit can provide a computer system with reliable, accurate and stable time data with sufficient resolution to distinguish events within the system and to coordinate events on the same network. The value of the timestamp is enhanced by the low latenoy resulting from the absence of interrupts.

The interface to the time decoder allows the host to read the date and time, carry out the translation into seconds for the NTP format and initilise the counter. The on-time synchronisation pulse from the decoder is then used to start the counter.

The interface card recognises that the time signal from the radio receiver is subject to slew and delay such that it does not represent the synchronisation pulse as actually transmitted. The on-time pulse from the decoder is therefore used to latch the counter, providing a sample of the signal; so allowing the host to determine the mean of the arrival times of the on-time signal as a better indication of the true synchronisation point. The NTP implementation contains code to do this very accurately. Once the mean is known the contents of the counter can be adjusted via an offset. Sampling can continue after initialisation at a low rate for tracking purposes.

It is envisaged that the interface circuit will have application at NTP stratum 2 or below even when not using the MSF time source and/or the high stability frequency source. The high resolution counter will find utility when combined with NTP.

## Claims

1. A circuit for providing data indicative of time characterised in that it comprises counting means (12) and control means (10), the counting means being arranged to count signals derived from a signal source (18), the count of the counting means being indicative of time in a selected format, the control means providing an interface to an external source (16) of time data whereby the counting means can be synchronised to the the time represented by the data.

2. A circuit according to claim 1, wherein said format is an NTP format.

3. A circuit according to claim 1 or claim 2, wherein the counting means is an n bit counter (12) in which the least significant m bits represent fractions of a second and the most significant (n-m) bits represent seconds.

4. A circuit according to claim 3, including circuit means (11) coupled to the output of the signal source and arranged to provide $2^m$ signals per second to the least significant m bits of the counting means.

5. A circuit according to claim 4, wherein said circuit means includes an m-bit counter (46 to 49) the outputs of which feed the address lines of an EPROM (50), the contents of the EPROM being such as to provide said $2^m$ bits per second at its output.

6. A circuit according to any preceding claim, wherein the signal source is a source (18) of stable frequency such as caesium beam standard.

7. A circuit according to any of claims 1 to 5, wherein the signal source is an oscillator (45) such as a crystal oscillator.

8. A circuit according to any preceding claim, wherein the external source of time data is the Rugby MSF source.

9. A circuit according to claims 6 and 7, wherein the circuit includes a switch (42) which allows the counter to be driven either by a source of stable frequency or by an oscillator.

10. A method of providing time data for a computer comprising loading time data derived from a reference time source into a counter, arranging the counter to count signals derived from signal source of stable frequency and periodically synchronising the time as represented by the count of the counter with the time data received from said reference source.

11. A method according to claim 10, including collecting samples of synchronising data derived from the source of time data and evaluating the median of said samples to obtain a synchronising point.

# FIG.1

FIG.2

EP 0 459 039 A1

FIG.3

Clock 2

Reset 1    Reset 2

Inv.

OR

EP 0 459 039 A1

FIG. 4

EP 0 459 039 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | THE COMPUTER JOURNAL, vol. 31, no. 6, December 1988, pages 496-502; R. COLE et al.: "An experiment in clock synchronisation" <br> * Page 497, left-hand column, lines 35-61; page 498, left-hand column, paragraph 2, lines 1,2; right-hand column, paragraph 3; page 499, paragraph 3; figure 1 * | 1-3,7,8, 10 | G 06 F 1/14 <br> G 04 G 7/00 |
| | — — — | | |
| A | IDEM | 4,6 | |
| | — — — | | |
| A | US-A-4 468 133  (SEIKO SASAKI) <br> * Abstract; figure 1 * | 4 | |
| | — — — — — | | |

| | |
|---|---|
| | TECHNICAL FIELDS SEARCHED (Int. Cl.5) |
| | G 06 F <br> G 04 G <br> G 04 F |

The present search report has been drawn up for all claims

| Place of search | Date of completion of search | Examiner |
|---|---|---|
| The Hague | 25 January 91 | CIARELLI N. |